# EUROPEAN PATENT SPECIFICATION

(11) **EP 2 385 962 B1**
(45) Date of publication and mention of the grant of the patent: **02.09.2015**
(21) Application number: 09795858.1
(22) Date of filing: 15.12.2009
(51) Int. Cl.: C08G 59/40, C08G 59/62, C08K 3/08, C08K 3/10, C08K 3/12, C08K 3/14, C08K 3/22, C08K 3/38, C08K 5/55, C08K 5/56, C08L 63/00, C08L 63/02

(54) **METAL STABILIZERS FOR EPOXY RESINS AND ADVANCEMENT PROCESS**
METALLSTABILISATOREN FÜR EPOXIDHARZE UND VORVERLÄNGERUNGSVERFAHREN
STABILISANTS MÉTALLIQUES POUR RÉSINES ÉPOXYDES, ET PROCÉDÉ D'AVANCEMENT

(30) Priority: 06.01.2009 US 142692 P
(43) Date of publication of application: 16.11.2011
(73) Proprietor: Dow Global Technologies LLC, Midland, MI 48674 (US)
(72) Inventor: THIBAULT, Raymond, Lake Jackson TX 77566 (US); MULLINS, Michael, Houston TX 77030 (US)
(74) Representative: Beck Greener
(86) International application number: PCT/US2009/068052
(87) International publication number: WO 2010/080400

(56) References cited:
- US-A- 5 648 436
- US-A1- 2004 147 711
- US-A1- 2006 069 185
- US-A1- 2008 039 556
- US-B1- 6 291 556

## Description

### FIELD OF THE INVENTION

Embodiments disclosed herein relate to the use of zinc oxide as a thermal stabilizer for a thermoset resin useful in electrical laminates.

### BACKGROUND OF THE INVENTION

Thermosettable materials useful in high-performance electrical applications, such as high-performance circuit boards, must meet a set of demanding property requirements. For example, such materials optimally have good high-temperature properties such as high glass transition temperatures (e.g., above 200°C) and low water absorption at elevated temperature (e.g., less than 0.5% water absorption). The components used in the thermoset formulation materials must also exhibit stable solubility in organic solvents, such as acetone, 2-butanone, or cyclohexanone, as the preparation of electrical laminates conventionally involves impregnation of a porous glass web with a solution of the thermosettable resin to form prepregs. For ease of processing in preparing prepregs for composite parts, the uncured blend will ideally have a low melting temperature (e.g., below 120°C) and a wide temperature range of processable viscosity (a wide "processing window").

Epoxy resins are one of the most widely used engineering resins, and are well-known for their use in electrical laminates. Epoxy resins have been used as materials for electrical/electronic equipment, such as materials for electrical laminates because of their superiority in heat resistance, chemical resistance, insulation property, dimensional stability, adhesiveness and the like.

Document US 2008/0039556 A1 is directed to encapsulated epoxy-resin molding compounds and an electronic component device sealed with the molding compound (see paragraph [0002] of US 2008/0039556 A1). The example 9 of US 2008/0039556 A1 discloses a composition comprising a biphenyl-based epoxy resin, a phenol-aralkyl resin curing agent and 1,7 phr zinc oxide as a flame retardant.

With the advent of lead-free solder regulations, the temperature to which electrical laminates are exposed has increased by about 20-40°C to 230-260°C. Accordingly, there exists a need to achieve thermal stability in epoxy resins while still maintaining toughness and processability. One method is to add a metallic stabilizer to the epoxy resin.

### SUMMARY OF THE INVENTION

The invention relates to the use of zinc oxide as a thermal stabiliser for a thermoset resin, wherein the thermoset resin is produced from an advancement reaction product, and wherein the advancement reaction product is prepared by contacting a) an epoxy resin; and b) a compound selected from a phenol-containing compound, an isocyanate-containing compound, and mixtures thereof; in the presence of zinc oxide and a catalyst in an advancement reaction zone under advancement reaction conditions.

### DETAILED DESCRIPTION OF THE INVENTION

The epoxy resins used in embodiments disclosed herein can vary and include conventional and commercially available epoxy resins, which can be used alone or in combinations of two or more, including, for example, novolac resins, isocyanate modified epoxy resins, and carboxylate adducts, among others. In choosing epoxy resins for compositions disclosed herein, consideration should not only be given to properties of the final product, but also to viscosity and other properties that may influence the processing of the resin composition.

An advancement reaction is a chain-lengthening reaction that produces higher molecular weight solid resins with higher melting points (generally above 90°C). The benefits of the advancement reaction generally include increased flexibility and corrosion resistance. The reaction also increases hydroxyl content which can be used later for cross-linking. The advancement reaction is based on the reaction of an epoxy functional group with a phenolic hydroxyl group leading to the formation of a secondary hydroxyl group.

The epoxy resin component can be any type of epoxy resin useful in molding compositions, including any material containing one or more reactive oxirane groups, referred to herein as "epoxy groups" or "epoxy functionality." Epoxy resins useful in embodiments disclosed herein can include mono-functional epoxy resins, multi- or poly-functional epoxy resins, and combinations thereof. Monomeric and polymeric epoxy resins can be aliphatic, cycloaliphatic, aromatic, or heterocyclic epoxy resins. The polymeric epoxies include linear polymers having terminal epoxy groups (a diglycidyl ether of a polyoxyalkylene glycol, for example), polymer skeletal oxirane units (polybutadiene polyepoxide, for example) and polymers having pendant epoxy groups (such as a glycidyl methacrylate polymer or copolymer, for example). The epoxies may be pure compounds, but are generally mixtures or compounds containing one, two or more epoxy groups per molecule. In some embodiments, epoxy resins can also include reactive -OH groups, which can react at higher temperatures with anhydrides, organic acids, amino resins, phenolic resins, or with epoxy groups (when catalyzed) to result in additional crosslinking. In an embodiment, the epoxy resin is produced by contacting a glycidyl ether with a bisphenol compound, such as, for example, bisphenol A or tetrabromobisphenol A to form oxazolidinone moieties.

In general, the epoxy resins can be glycidylated resins, cycloaliphatic resins, epoxidized oils, and so forth. The glycidated resins are frequently the reaction product of a glycidyl ether, such as epichlorohydrin, and a bisphenol compound such as bisphenol A; C₄ to C₂₈ alkyl-glycidyl ethers; C₂ to C₂₈ alkyl-and alkenyl-glycidyl esters; C₁ to C₂₈ alkyl-, mono- and poly-phenol glycidyl ethers; polyglycidyl ethers of polyvalent phenols, such as pyrocatechol, resorcinol, hydroquinone, 4,4'-dihydroxydiphenyl methane (or bisphenol F), 4,4'-dihydroxy-3,3'-dimethyldiphenyl methane, 4,4'-dihydroxydiphenyl dimethyl methane (or bisphenol A), 4,4'-dihydroxydiphenyl methyl methane, 4,4'-dihydroxydiphenyl cyclohexane, 4,4'-dihydroxy-3,3'-dimethyldiphenyl propane, 4,4'-dihydroxydiphenyl sulfone, and tris(4-hydroxyphynyl)methane; polyglycidyl ethers of the chlorination and bromination products of the above-mentioned diphenols; polyglycidyl ethers of novolacs; polyglycidyl ethers of diphenols obtained by esterifying ethers of diphenols obtained by esterifying salts of an aromatic hydrocarboxylic acid with a dihaloalkane or dihalogen dialkyl ether; polyglycidyl ethers of polyphenols obtained by condensing phenols and long-chain halogen paraffins containing at least two halogen atoms. Other examples of epoxy resins useful in embodiments disclosed herein include bis-4,4'-(1-methylethylidene) phenol diglycidyl ether and (chloromethyl) oxirane bisphenol A diglycidyl ether.

In some embodiments, the epoxy resin can include glycidyl ether type; glycidyl-ester type; alicyclic type; heterocyclic type, and halogenated epoxy resins, etc. Nonlimiting examples of suitable epoxy resins can include cresol novolac epoxy resin, phenolic novolac epoxy resin, biphenyl epoxy resin, hydroquinone epoxy resin, stilbene epoxy resin, and mixtures and combinations thereof.

Suitable polyepoxy compounds can include resorcinol diglycidyl ether (1,3-bis-(2,3-epoxypropoxy)benzene), diglycidyl ether of bisphenol A (2,2-bis(p-(2,3-epoxypropoxy)phenyl)propane), triglycidyl p-aminophenol (4-(2,3-epoxypropoxy)-N,N-bis(2,3-epoxypropyl)aniline), diglycidyl ether of bromobispehnol A (2,2-bis(4-(2,3-epoxypropoxy)3-bromo-phenyl)propane), diglydicylether of bisphenol F (2,2-bis(p-(2,3-epoxypropoxy)phenyl)methane), triglycidyl ether of meta- and/or para-aminophenol (3-(2,3-epoxypropoxy)N,N-bis(2,3-epoxypropyl)aniline), and tetraglycidyl methylene dianiline (N,N,N',N'-tetra(2,3-epoxypropyl) 4,4'-diaminodiphenyl methane), and mixtures of two or more polyepoxy compounds. A more exhaustive list of useful epoxy resins found can be found in Lee, H. and Neville, K., Handbook of Epoxy Resins, McGraw-Hill Book Company, 1982 reissue.

Other suitable epoxy resins include polyepoxy compounds based on aromatic amines and epichlorohydrin, such as N,N'-diglycidyl-aniline; N,N'-dimethyl-N,N'-diglycidyl-4,4'-diaminodiphenyl methane; N,N,N',N'-tetraglycidyl-4,4'-diaminodiphenyl methane; N-diglycidyl-4-aminophenyl glycidyl ether; and N,N,N',N'-tetraglycidyl-1,3-propylene bis-4-aminobenzoate. Epoxy resins can also include glycidyl derivatives of one or more of: aromatic diamines, aromatic monoprimary amines, aminophenols, polyhydric phenols, polyhydric alcohols, polycarboxylic acids.

Useful epoxy resins include, for example, polyglycidyl ethers of polyhydric polyols, such as ethylene glycol, triethylene glycol, 1,2-propylene glycol, 1,5-pentanediol, 1,2,6-hexanetriol, glycerol, and 2,2-bis(4-hydroxy cyclohexyl)propane; polyglycidyl ethers of aliphatic and aromatic polycarboxylic acids, such as, for example, oxalic acid, succinic acid, glutaric acid, terephthalic acid, 2,6-napthalene dicarboxylic acid, and dimerized linoleic acid; polyglycidyl ethers of polyphenols, such as, for example, bisphenol A, bisphenol F, 1,1-bis(4-hydroxyphenyl)ethane, 1,1-bis(4-hydroxyphenyl)isobutane, and 1,5-dihydroxy napthalene; modified epoxy resins with acrylate or urethane moieties; glycidlyamine epoxy resins; and novolac resins.

The epoxy compounds can be cycloaliphatic or alicyclic epoxides. Examples of cycloaliphatic epoxides include diepoxides of cycloaliphatic esters of dicarboxylic acids such as bis(3,4-epoxycyclohexylmethyl)oxalate, bis(3,4-epoxycyclohexylmethyl)adipate, bis(3,4-epoxy-6-methylcyclohexylmethyl)adipate, bis(3,4-epoxycyclohexylmethyl)pimelate; vinylcyclohexene diepoxide; limonene diepoxide; dicyclopentadiene diepoxide; and the like. Other suitable diepoxides of cycloaliphatic esters of dicarboxylic acids are described, for example, in U.S. Patent No. 2,750,395.

Other cycloaliphatic epoxides include 3,4-epoxycyclohexylmethyl-3,4-epoxycyclohexane carboxylates such as 3,4-epoxycyclohexylmethyl-3,4-epoxycyclohexane carboxylate; 3,4-epoxy-1-methylcyclohexyl-methyl-3,4-epoxy-1-methylcyclohexane carboxylate; 6-methyl-3,4-epoxy cyclohexylmethylmethyl-6-methyl-3,4-epoxycyclohexane carboxylate; 3,4-epoxy-2-methylcyclohexylmethyl-3,4-epoxy-2-methylcyclohexane carboxylate; 3,4-epoxy-3-methylcyclohexyl-methyl-3,4-epoxy-3-methylcyclohexane carboxylate; 3,4-epoxy-5-methylcyclohexyl-methyl-3,4-epoxy-5-methylcyclohexane carboxylate and the like. Other suitable 3,4-epoxycyclohexylmethyl-3,4-epoxycyclohexane carboxylates are described, for example, in U.S. Patent No. 2,890,194.

Further epoxy-containing materials which are useful include those based on glycidyl ether monomers. Examples are di- or polyglycidyl ethers of polyhydric phenols obtained by reacting a polyhydric phenol, such as a bisphenol compound with an excess of chlorohydrin such as epichlorohydrin. Such polyhydric phenols include resorcinol, bis(4-hydroxyphenyl)methane (known as bisphenol F), 2,2-bis(4-hydroxyphenyl)propane (known as bisphenol A), 2,2-bis(4'-hydroxy-3',5'-dibromophenyl)propane, 1,1,2,2-tetrakis(4'-hydroxy-phenyl)ethane or condensates of phenols with formaldehyde that are obtained under acid conditions such as phenol novolacs and cresol novolacs. Examples of this type of epoxy resin are described in U.S. Patent No. 3,018,262. Other examples include di- or polyglycidyl ethers of polyhydric alcohols such as 1,4-butanediol, or polyalkylene glycols such as polypropylene glycol and di- or polyglycidyl ethers of cycloaliphatic polyols such as 2,2-bis(4-hydroxycyclohexyl)propane. Other examples are monofunctional resins such as cresyl glycidyl ether or butyl glycidyl ether.

Another class of epoxy compounds are polyglycidyl esters and poly(beta-methylglycidyl) esters of polyvalent carboxylic acids such as phthalic acid, terephthalic acid, tetrahydrophthalic acid or hexahydrophthalic acid. A further class of epoxy compounds are N-glycidyl derivatives of amines, amides and heterocyclic nitrogen bases such as N,N-diglycidyl aniline, N,N-diglycidyl toluidine, N,N,N',N'-tetraglycidyl bis(4-aminophenyl)methane, triglycidyl isocyanurate, N,N'-diglycidyl ethyl urea, N,N'-diglycidyl-5,5-dimethylhydantoin, and N,N'-diglycidyl-5-isopropylhydantoin.

Still other epoxy-containing materials are copolymers of acrylic acid esters of glycidol such as glycidylacrylate and glycidylmethacrylate with one or more copolymerizable vinyl compounds. Examples of such copolymers are 1:1 styrene-glycidylmethacrylate, 1:1 methyl-methacrylateglycidylacrylate and a 62.5:24:13.5 methylmethacrylate-ethyl acrylate-glycidylmethacrylate.

Epoxy compounds that are readily available include octadecylene oxide; glycidylmethacrylate; diglycidyl ether of bisphenol A; D.E.R.™ 331 (bisphenol A liquid epoxy resin) and D.E.R.™ 332 (diglycidyl ether of bisphenol A) available from The Dow Chemical Company, Midland, Michigan; vinylcyclohexene dioxide; 3,4-epoxycyclohexylmethyl-3,4-epoxycyclohexane carboxylate; 3,4-epoxy-6-methylcyclohexyl-methyl-3,4-epoxy-6-methylcyclohexane carboxylate; bis(3,4-epoxy-6-methylcyclohexylmethyl) adipate; bis(2,3-epoxycyclopentyl) ether; aliphatic epoxy modified with polypropylene glycol; dipentene dioxide; epoxidized polybutadiene; silicone resin containing epoxy functionality; flame retardant epoxy resins (such as a brominated bisphenol type epoxy resin available under the trade names D.E.R.™ 580, available from The Dow Chemical Company, Midland, Michigan); polyglycidyl ether of phenolformaldehyde novolac (such as those available under the tradenames D.E.N.™ 431 and D.E.N.™ 438 available from The Dow Chemical Company, Midland, Michigan); and resorcinol diglycidyl ether. Although not specifically mentioned, other epoxy resins under the tradename designations D.E.R.™ and D.E.N.™ available from The Dow Chemical Company can also be used.

In an embodiment, the epoxy resin can be produced by contacting a glycidyl ether with a bisphenol compound and a polyisocyanate. In another embodiment, the epoxy resin can be produced by contacting a glycidyl ether with a bisphenol compound and a bisisocyanate.

The zinc oxide can be formed *in situ* by adding a zinc oxide precursor to the epoxy resin. In an embodiment, the zinc oxide precursor can be selected from the group consisting of zinc phenates (phenoxide) and derivatives thereof. In an embodiment, the zinc oxide precursor is zinc phenate.

The stabilizer can have any suitable particle size. In an embodiment, the particles can be on a micro or nano scale.

In the embodiments any suitable phenol-containing compound or isocyanate-containing compound can be used in the advancement reaction. In an embodiment, the phenol-containing compound is selected from the group consisting of bisphenol A, tetrabromobisphenol A, and a phosphorus-containing phenolic compound. Phosphorus-containing compounds useful in an embodiment, include, but are not limited to adducts of DOP (9,10-Dihydro-9-oxa-10-phosphaphenanthrene 10-oxide) with quinone and naphthoquinone, DOP-HQ (1,4-benzenediol, 2-(6-oxido-6H-dibenz[c,e][1,2]oxaphosphorin-6-yl)-), DOP-NQ (1,4-naphthalenediol, 2-(6-oxido-6H-dibenz[c,e][1,2]oxaphosphorin-6-yl)-), and combinations thereof.

In another embodiment an isocyanate-containing compound can be used in the advancement reaction. In an embodiment, the isocyanate-containing compound is toluene diisocyanate or methylene diisocyanate (also known as MDI or bis(isocyanatophenyl)methane).

Advancement reaction conditions in the advancement reaction zone can include a temperature in the range of from 100 to 250°C. In an embodiment, the advancement reaction begins at 100-110°C. The catalyst is pitched and then an exotherm increases the temperature to 180°C. After a period of up to 2 hours, a quantity of solvent such as acetone or methyl ethyl ketone is introduced to dilute the advanced resin to an 80% solids solution.

In an embodiment, the advancement reaction conditions can also include an absolute pressure in the range of from 0.1 to 3 bar.

In an embodiment, the advancement reaction product has a number average molecular weight in the range of from 250 to 5000 g/mol. The advancement reaction product generally has an epoxide equivalent weight in the range of from 200 to 600 g/eq. In an embodiment, the product has an epoxide equivalent weight of 250 to 500 g/eq. The advancement reaction product generally has an epoxy equivalent weight (EEW) in the range of from 350 to 500 g/eq.

The advancement reaction products in the above-described embodiments can be used to produce varnishes. In addition to an epoxy resin, a varnish can also contain curing agents, hardeners, and catalysts. A varnish can then be used to produce a variety of products including but not limited to prepregs, electrical laminates, coatings, composites, castings and adhesives.

The proportions of components in varnishes produced can depend, in part, upon the properties desired in the thermoset resins, electrical laminates, or coatings to be produced. For example, variables to consider in selecting hardeners and amounts of hardeners may include the epoxy composition (if a blend), the desired properties of the electrical laminate composition (T_{g}, T_{d}, flexibility, electrical properties, etc.), desired cure rates, and the number of reactive groups per catalyst molecule, such as the number of active hydrogens in an amine.

In some embodiments, thermoset resins formed from the advancement reaction products may have a glass transition temperature, as measured using differential scanning calorimetry, of at least 190°C. In other embodiments, thermoset resins formed from the above described curable compositions may have a glass transition temperature, as measured using differential scanning calorimetry, of at least 200°C; at least 210°C in other embodiments; at least 220°C in other embodiments; and at least 230°C in yet other embodiments.

In some embodiments, thermoset resins formed from the advancement reaction products may have a 5% decomposition temperature, T_{d}, as measured using thermogravimetric analyses (TGA), of at least 300°C. In other embodiments, thermoset resins formed from the above described curable compositions may have a T_{d} as measured using TGA, of at least 320°C; at least 330°C in other embodiments; at least 340°C in other embodiments; and at least 350°C in yet other embodiments..

In some embodiments, composites can be formed by curing the compositions disclosed herein. In other embodiments, composites can be formed by applying a curable epoxy resin composition to a substrate or a reinforcing material, such as by impregnating or coating the substrate or reinforcing material to form a prepreg, and curing the prepreg under pressure to form the electrical laminate composition.

After the varnish has been produced, as described above, it can be disposed on, in, or between the above described substrates, before, during, or after cure of an electrical laminate composition. For example, a composite can be formed by coating a substrate with a varnish. Coating may be performed by various procedures, including spray coating, curtain flow coating, coating with a roll coater or a gravure coater, brush coating, and dipping or immersion coating.

In various embodiments, the substrate can be monolayer or multi-layer. For example, the substrate may be a composite of two alloys, a multi-layered polymeric article, and a metal-coated polymer, among others, for example. In other various embodiments, one or more layers of the curable composition may be disposed on a substrate. Other multi-layer composites, formed by various combinations of substrate layers and electrical laminate composition layers are also envisaged herein.

In some embodiments, the heating of the varnish can be localized, such as to avoid overheating of a temperature-sensitive substrate, for example. In other embodiments, the heating may include heating the substrate and the composition.

Curing of the compositions disclosed herein may require a temperature of at least 30°C, up to 250°C, for periods of minutes up to hours, depending on the epoxy resin, hardener, and catalyst, if used. In other embodiments, curing can occur at a temperature of at least 100°C, for periods of minutes up to hours. Post-treatments may be used as well, such post-treatments ordinarily being at temperatures between 100°C and 250°C.

In some embodiments, curing can be staged to prevent exotherms. Staging, for example, includes curing for a period of time at a temperature followed by curing for a period of time at a higher temperature. Staged curing may include two or more curing stages, and may commence at temperatures below 180°C in some embodiments, and below 150°C in other embodiments.

In some embodiments, curing temperatures can range from a lower limit of 30°C, 40°C, 50°C, 60°C, 70°C, 80°C, 90°C, 100°C, 110°C, 120°C, 130°C, 140°C, 150°C, 160°C, 170°C, or 180°C to an upper limit of 250°C, 240°C, 230°C, 220°C, 210°C, 200°C, 190°C, 180°C, 170°C, 160°C, where the range may be from any lower limit to any upper limit.

The varnishes disclosed herein may be useful in composites containing high strength filaments or fibers such as carbon (graphite), glass, boron, and the like. Composites can contain from 30% to 70%, in some embodiments, and from 40% to 70% in other embodiments, of these fibers based on the total volume of the composite.

Fiber reinforced composites, for example, can be formed by hot melt prepregging. The prepregging method is characterized by impregnating bands or fabrics of continuous fiber with a thermosetting composition as described herein in molten form to yield a prepreg, which is laid up and cured to provide a composite of fiber and epoxy resin.

Other processing techniques can be used to form electrical laminate composites containing the compositions disclosed herein. For example, filament winding, solvent prepregging, and pultrusion are typical processing techniques in which the curable composition may be used. Moreover, fibers in the form of bundles can be coated with the curable composition, laid up as by filament winding, and cured to form a composite.

The curable compositions and composites described herein may be useful as adhesives, structural and electrical laminates, coatings, marine coatings, composites, powder coatings, adhesives, castings, structures for the aerospace industry, and as circuit boards and the like for the electronics industry.

In some embodiments, the varnishes and resulting thermoset resins may be used in composites, castings, coatings, adhesives, or sealants that may be disposed on, in, or between various substrates. In other embodiments, the curable compositions may be applied to a substrate to obtain an epoxy based prepreg. As used herein, the substrates include, for example, glass cloth, a glass fiber, glass paper, paper, and similar substrates of polyethylene and polypropylene. The obtained prepreg can be cut into a desired size. An electrical conductive layer can be formed on the laminate / prepreg with an electrical conductive material. As used herein, suitable electrical conductive materials include electrical conductive metals such as copper, gold, silver, platinum and aluminum. Such electrical laminates may be used, for example, as multi-layer printed circuit boards for electrical or electronics equipment. Laminates made from the maleimide-triazine-epoxy polymer blends are especially useful for the production of HDI (high density interconnect) boards. Examples of HDI boards include those used in cell phones or those used for Interconnect (IC) substrates.

### Examples

The following examples are intended to be illustrative of the present invention and to teach one of ordinary skill in the art to make and use the invention. The examples are not intended to limit the invention in any way.

### Test Methods

Glass transition temperature, T_{g}, is the temperature at which an amorphous solid goes from a hard, glass-like state to a rubber-like state. T_{g} is determined by differential scanning calorimetry (DSC) (IPC Method IPC-TM-650 2.4.25).

Thermal decomposition temperature, T_{d}, was measured by thermo-gravimetric analysis (TGA) under nitrogen, using TA Instruments Thermal Analysis - TGA 1000, with a heating ramp of 10°/minute from 40 to 400°C. T_{d} was determined at 5% weight loss for the fully cured resin films (200°C @ 90 minutes, in an oven with good ventilation) from a hot plate (171°C at 250-300 seconds). The T_{d} (5% wt loss) measurement is the temperature at which 5 weight percent of the sample is lost to decomposition products. The T_{d} (10% wt loss) is the temperature at which 10 weight percent of the sample is lost to decomposition products.

Epoxy equivalent weight (EEW) is reported in g/eq (grams per equivalent) and is determined by dissolving a small quantity of resin in methylene chloride. This solution is then titrated in perchloric acid in the presence of excess tetraammonium bromide, as referenced in ASTM D1652. The percentage of solids in a given resin was determined by subjecting an approximately 1 gram aliquot of the resin to 60 minutes on a 170°C hot plate. The simple calculation is as follows: weight before / weight after x 100% yields = % solids.

Components used in these examples are shown in Table I below.

**Table I: Epoxy Resin System Components**

| **Name** | **Equiv wt (solids)** | **Bromine wt% (solids)** |
|---|---|---|
| D.E.R.™ 530 brominated epoxy resin | 425-440 | 19.5-21.5% |
| D.E.R.™ 539 brominated epoxy resin | 450 | 19-21% |
| D.E.R.™ 592 oxazolidone-modified brominated epoxy resin | 360 | 16.5-18% |
| D.E.R.™ 383 Diglycidyl ether of bisphenol A | 180-184 | N/A |
| TBBA Tetrabromo-bisphenol A | ∼270 (HEW) | 58.8% |
| D.E.R.™ 560 | 440-407 | 47-51% |
| PAPI™ 27 | 131-136 (isocyanate) | N/A |
| Dicyandiamide (DICY) | N/A | N/A |
| 2-MI | N/A | N/A |

### Stabilizers

**Table 2. List of Zn additives incorporated into resin advancements.**

| Name | Additive | Supplier | Structure/formula | MW |
|---|---|---|---|---|
| NanoTek™ ZnO | | | | |
| NanoGard ™ZnO | | | | |
| NanoTek™ C1 | | Nanophase Technologies | | |
| NanoTek™ C2 | ZnO | Romeoville, IL | ZnO | 81.39 |
| NanoTek™ 50% | | | | |
| dispersion in Dowanol™ PMA | | | | |
| ZnO | | Aldrich | | |
| Zn Acetylacetonate | Zn(acac)₂ | Aldrich | 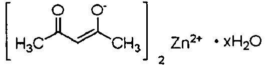 | 263.61 (Anh) |
| FireBrake™ ZB-XF | Zn Borate | Borax | 2ZnO · 3B₂O₃ · 3.5H₂O | 434.48 |

### Example 1

Various advancement reactions were carried out with D.E.R.™ 530 and D.E.R.™ 539 and various amounts of zinc oxide.

### D.E.R.™ 530 resin advancement yielding 1 phr ZnO

To a 4-neck, 500 mL round bottom flask, dried under a nitrogen atmosphere and equipped with mechanical stirrer, nitrogen inlet, cooling condenser, and thermocouple probe was added 100g of D.E.R.™ 383, 50.30g TBBA, and 1.52 g ZnO. The resulting white slurry was heated to 115 °C under constant stirring. Once the TBBA dissolved, the reaction was cooled to 100 °C and 0.065 g ethyl triphenylphosphonium acetate (catalyst) was added in one portion. The temperature was then slowly raised to 180 °C at a heating rate of 1-2 °C/min. When the temperature reached 180 °C, an aliquot was taken for analysis and the reaction mixture was diluted with 37.96 g of acetone to dilute to ∼80% solids. Product is obtained as a milky white liquid with an EEW (neat) of 290.8 g/eq, the 80% solids solutions (herein referred to as 'A80') of 368.2 g/eq.

### D.E.R.™ 530 - 2 phr ZnO.

Procedure was same as above however 3.07 g ZnO was charged into the reaction pot to yield 2 phr. EEW (neat) 278.7 g/eq, (A80) 352.3 g/eq.

### D.E.R.™ 539 - 1 phr ZnO.

Procedure followed the one specified above with the addition of 1.53 g tetraphenol ethane (TPE) to yield 1 phr TPE. EEW (neat) 299.5 g/eq, (A80) 379.8 g/eq.

### D.E.R.™ 539 - 1 phr ZnO.

Procedure same as the one described above however 1.54 g TPE was introduced and the heating rate was slowed to 0.7 °C/min rather than the standard 1-2 °C/min. EEW (neat) 402.3 g/eq, (A80) 488.1 g/eq.

### Example 2 - Varnish prepared from D.E.R.™ 539-1 phr ZnO resin.

To an 8 oz glass bottle with screw cap was added 130.030 g resin, 0.530 g of a 20% 2-methylimidazole solution in methanol, and 27.050 g of a 10% Dicyandiamide solution in 1:1 dimethylformamide:DOWANOL™ PM. Stroke cure reactivity was determined to be 205 seconds. Two T_{g} measurements were taken for the sample: T_{g}(1) and T_{g}(2) were 139.1 °C and 140.3 °C, respectively. The T_{d} value was 324.1 °C.

### Example 3 - Laboratory-Scale D.E.R.™ 592 Resin Advancements in the presence of Zinc additives

D.E.R.™ 592 was synthesized simultaneously with an advancement reaction in the presence of Aldrich ZnO. To a 250 mL, 3-neck round bottom flask equipped with a mechanical stirrer, temperature probe and nitrogen inlet, and a dropping funnel was charged 132.53 g of D.E.R.™ 383. After this resin was spread evenly over in the inside of the glass, 87.44 g of D.E.R.™ 560 and 2.46 g of ZnO (Aldrich) was introduced. The resulting mixture was allowed to stir at 120°C until the D.E.R.™ 560 dissolved. A 0.100 gram quantity of 10% 2-phenylimidazole (in methanol) was then introduced and the temperature was elevated to 130°C. A 30.13 gram quantity of PAPI™ 27 was charged to the dropping funnel and was added dropwise over the course of two hours. The temperature was increased steadily from 130°C to 165°C at the end of PAPI™ 27 addition. Upon complete addition of PAPI™ 27, the reaction mixture was allowed to digest for 1 hr. The resulting resin was then let down with 55.57g of acetone yielding a milky white solution of D.E.R.™ 592-A80 with 1 phr ZnO. The EEW (neat) was 346.9 g/eq, A80 was 424.6 g/eq.

### Example 4

A total of 18 laboratory-scale resin advancements utilizing different Zn-based additives from varying sources were completed, the results of which are tabulated in Table 3.

**Table 3. Laboratory-scale D.E.R.™ 592 resin advancements prepared in the presence of ZnO, ZnBorate, or Zn(acac)₂. All Zn additives are at 1 phr loading unless otherwise stated.**

| **Scale** | **Zn** | **EEW** | |
|---|---|---|---|
| | | **Neat** | **A80** |
| 250 g | ZnO | 338.2 | 346.9 |
| 250 g | ZnO | 264.5 | Not det. |
| 250 g | ZnO | 332.0 | 407.2 |
| 250 g | ZnBorate | 360.5 | 455.5 |
| 250 g | Zn(acac)₂ | Gelled in pot | |
| 250 g | Zn(acac)₂ | Gelled in pot | |
| 2500 g | ZnO | Gelled in pot | |
| 2500 g | ZnO | 336.0 | 415.3 |
| 250g | ZnBorate(5 phr loading) | 361.5 | 437.9 |
| 2500g | ZnBorate(5 phr loading) | 381.9 | 451.6 |
| 2500g | ZnO(5 phr loading) | 266.3 | 331.4 |
| 250g | NanoTek™ ZnO | 299.7 | 359.7 |
| 500g | NanoGard ™ZnO | 320.8 | 393.7 |
| 500g | NanoTek™ C1 ZnO | 324.7 | 405.8 |
| 500g | NanoTek™ C2 ZnO | 332.5 | 400.2 |
| 500g | NanoTek™ ZnO | 345.9 | 405.0 |
| 500g | NanoGard™ ZnO | 329.6 | 412.6 |
| 250g | ZnO 50% in Dowanol™ PMA | 340.4 | 406.4 |

## Claims

1. The use of zinc oxide as a thermal stabiliser for a thermoset resin, wherein the thermoset resin is produced from an advancement reaction product, and wherein the advancement reaction product is prepared by contacting
a) an epoxy resin; and
b) a compound selected from a phenol-containing compound, an isocyanate-containing compound and mixtures thereof;
in the presence of zinc oxide and a catalyst in an advancement reaction zone under advancement reaction conditions.

2. A use as claimed in Claim 1, wherein the epoxy resin is brominated.

3. A use as claimed in Claim 1, wherein the epoxy resin is substantially free of a halogen-containing compound.

4. A use as claimed in Claim 1, wherein the phenol-containing compound is selected from bisphenol A, tetrabromobisphenol A and a phosphorus-containing phenolic compound.

5. A use as claimed in Claim 1, wherein the isocyanate-containing compound is a diisocyanate selected from toluene diisocyanate and methylene diisocyanate.

6. A use as claimed in Claim 1, wherein the epoxy resin is selected from a phenolic resin, a benzoxazine resin, an aryl cyanate resin, an aryl triazine resin, a maleimide resin and combinations of any two or more thereof.

7. A use as claimed in Claim 1, wherein the catalyst is selected from a phosphonium catalyst and a heterocyclic amine catalyst.

8. A use as claimed in Claim 1, wherein the advancement reaction conditions include a temperature of from 100 to 250°C.

9. A use as claimed in Claim 1, wherein the advancement reaction conditions include an absolute pressure of from 0.1 to 3 bar.

10. A use as claimed in Claim 1 wherein the advancement reaction product has a number average molecular weight of from 250 to 5000 g/mol.

11. A use as claimed in Claim 1, wherein the advancement reaction product has an epoxide equivalent weight of from 200 to 600 g/eq.

## Patentansprüche

1. Die Verwendung von Zinkoxid als ein Wärme-Stabilisator für ein Duroplastharz, wobei das Duroplastharz aus einem Vorverlängerungsreaktionsprodukt erzeugt ist, und wobei das Vorverlängerungsreaktionsprodukt hergestellt wird durch das In-Kontakt-Bringen von
a) einem Epoxidharz; und
b) einer Verbindung, ausgewählt aus einer Phenol enthaltenden Verbindung, einer Isocyanat enthaltenden Verbindung und Mischungen davon;
in der Gegenwart von Zinkoxid und einem Katalysator in einer Vorverlängerungsreaktionszone unter Vorverlängerungsreaktionsbedingungen.

2. Verwendung gemäß Anspruch 1, wobei das Epoxidharz bromiert ist.

3. Verwendung gemäß Anspruch 1, wobei das Epoxidharz im Wesentlichen frei von einer Halogen enthaltenden Verbindung ist.

4. Verwendung gemäß Anspruch 1, wobei die Phenol enthaltende Verbindung aus Bisphenol A, Tetrabrombisphenol A und einer Phosphor enthaltenden phenolischen Verbindung ausgewählt ist.

5. Verwendung gemäß Anspruch 1, wobei die Isocyanat enthaltende Verbindung ein Diisocyanat ist, ausgewählt aus Toluoldiisocyanat und Methylendiisocyanat.

6. Verwendung gemäß Anspruch 1, wobei das Epoxidharz ausgewählt ist aus einem Phenolharz, einem Benzoxazinharz, einem Arylcyanatharz, einem Aryltriazinharz, einem Maleimidharz und Kombinationen von beliebigen zwei oder mehreren davon.

7. Verwendung gemäß Anspruch 1, wobei der Katalysator ausgewählt ist aus einem Phosphoniumkatalysator und einem heterozyklischen Aminkatalysator.

8. Verwendung gemäß Anspruch 1, wobei die Vorverlängerungsreaktionsbedingungen eine Temperatur von 100 bis 250 °C umfassen.

9. Verwendung gemäß Anspruch 1, wobei die Vorverlängerungsreaktionsbedingungen einen Absolutdruck von 0,1 bis 3 bar umfassen.

10. Verwendung gemäß Anspruch 1, wobei das Vorverlängerungsreaktionsprodukt ein Molekulargewicht im Zahlenmittel von 250 bis 5000 g/mol aufweist.

11. Verwendung gemäß Anspruch 1, wobei das Vorverlängerungsreaktionsprodukt ein Epoxidäquivalentgewicht von 200 bis 600 g/val aufweist.

## Revendications

1. L'utilisation d'oxyde de zinc en tant que stabilisant thermique pour une résine thermodurcie, la résine thermodurcie étant produite à partir d'un produit de réaction d'avancement, et le produit de réaction d'avancement étant préparé en mettant en contact
a) une résine époxy ; et
b) un composé sélectionné parmi un composé contenant du phénol, un composé contenant de l'isocyanate et des mélanges de ceux-ci ;
en présence d'oxyde de zinc et un catalyseur dans une zone de réaction d'avancement dans des conditions de réaction d'avancement.

2. Une utilisation telle que revendiquée dans la revendication 1, dans laquelle la résine époxy est bromée.

3. Une utilisation telle que revendiquée dans la revendication 1, dans laquelle la résine époxy est substantiellement dépourvue d'un composé contenant de l'halogène.

4. Une utilisation telle que revendiquée dans la revendication 1, dans laquelle le composé contenant du phénol est sélectionné parmi le bisphénol A, le tétrabromobisphénol A et un composé phénolique contenant du phosphore.

5. Une utilisation telle que revendiquée dans la revendication 1, dans laquelle le composé contenant de l'isocyanate est un diisocyanate sélectionné parmi le diisocyanate de toluène et le diisocyanate de méthylène.

6. Une utilisation telle que revendiquée dans la revendication 1, dans laquelle la résine époxy est sélectionnée parmi une résine phénolique, une résine benzoxazine, une résine aryle cyanate, une résine aryle triazine, une résine maléimide et des combinaisons de deux quelconques ou plus de celles-ci.

7. Une utilisation telle que revendiquée dans la revendication 1, dans laquelle le catalyseur est sélectionné parmi un catalyseur de phosphonium et un catalyseur d'amine hétérocyclique.

8. Une utilisation telle que revendiquée dans la revendication 1, dans laquelle les conditions de réaction d'avancement incluent une température allant de 100 à 250 °C.

9. Une utilisation telle que revendiquée dans la revendication 1, dans laquelle les conditions de réaction d'avancement incluent une pression absolue allant de 0,1 à 3 bar.

10. Une utilisation telle que revendiquée dans la revendication 1 dans laquelle le produit de réaction d'avancement a une masse moléculaire moyenne en nombre allant de 250 à 5 000 g/mole.

11. Une utilisation telle que revendiquée dans la revendication 1, dans laquelle le produit de réaction d'avancement a un poids équivalent d'époxyde allant de 200 à 600 g/éq.
